# EUROPÄISCHE PATENTSCHRIFT

(11) **EP 1 327 098 B1**
(45) Veröffentlichungstag und Bekanntmachung des Hinweises auf die Patenterteilung: **17.05.2006**
(21) Anmeldenummer: 01978407.3
(22) Anmeldetag: 12.10.2001
(51) Int. Cl.: F16L 55/165, E21B 7/30

(54) **VORRICHTUNG ZUM AUFWEITEN EINER ROHRLEITUNG**
DEVICE FOR EXPANDING A PIPELINE
DISPOSITIF POUR ELARGIR UNE CANALISATION

(30) Priorität: 12.10.2000 DE 10050407
(43) Veröffentlichungstag der Anmeldung: 16.07.2003
(73) Patentinhaber: Tracto-Technik GmbH, 57368 Lennestadt (DE)
(72) Erfinder: PÜTTMANN, Franz-Josef, 57368 Lennestadt (DE)
(74) Vertreter: König, Gregor Sebastian
(86) Internationale Anmeldenummer: PCT/EP2001/011811
(87) Internationale Veröffentlichungsnummer: WO 2002/031398

(56) Entgegenhaltungen:
- EP-A- 0 493 645
- EP-A- 0 872 679
- DE-C- 19 831 190
- NL-C- 1 006 712

## Beschreibung

Die Erfindung betrifft eine Vorrichtung zum Aufweiten unterirdisch verlegter Rohrleitungen mit einem Aufweitwerkzeug und nimmt die Priorität der deutschen Patentanmeldung 100 50 407.8-24 in Anspruch.

Beim zerstörenden Ersetzen unterirdisch verlegter Rohrleitungen wird die Altleitung entweder aus dem Erdreich gezogen oder mit Hilfe eines Werkzeugs zerstört und in das seitliche Erdreich verdrängt. Das Zerstören von Metallrohren, insbesondere von gußeisernen bzw. duktilen Wasser- oder Gasleitungen erfolgt in der Regel mit Hilfe eines Schneidwerkzeuges, welches durch das Rohr bewegt wird und dieses dabei in Längsrichtung öffnet. Hierzu sind verschiedene Vorrichtungen bekannt, wie beispielsweise der in der DE 198 31 190 C1 beschriebene Schneidwagen.

EP 0 872 679 B1 offenbart eine Aufweitvorrichtung entsprechend dem Oberbegriff von Anspruch 1.

Zum Ersetzen der Altleitung durch ein Neurohr muß dieses mit gleichem oder größerem Durchmesser entlang der Achse des geöffneten Rohres bewegt werden. Folglich muß das Altrohr nach dem Schneiden aufgeweitet werden. Das Altrohr hat darüber hinaus die Tendenz, nach dem Aufschneiden in seine ursprüngliche Geometrie zurückzukehren, so daß im Übermaß aufgeweitet werden muß. Hierzu wurden verschiedene Vorrichtungen entwickelt, bei denen das Schneidwerkzeug in der Regel als Aufweitkonus ausgebildet ist. Dabei besitzt der Werkzeugkorpus einen konischen Grundkörper mit einem Maximaldurchmesser, der größer ist als der der Altleitung. Auf dem Grundkörper ist mindestens ein Messer angeordnet. Dieser Grundkörper wird beispielsweise mit Hilfe eines Zug- oder Schubgestänges durch die Altleitung bewegt, wobei die Leitungswand durch das Messer aufgetrennt und durch den Grundkörper aufgeweitet wird, so daß ein Neurohr entweder unmittelbar hinter dem Grundkörper oder nach abgeschlossenem Aufweitvorgang in die Trasse der Altleitung eingezogen werden kann.

Bei einer solchen Vorrichtung treten jedoch erhebliche Schwierigkeiten auf, da der Grundkörper mit seiner Außenfläche an der Rohrinnenwandung anliegt und je nach Altrohrmaterial und umgebendem Erdreich erhebliche Reibungskräfte zu überwinden sind. Des weiteren findet beim Aufweiten von insbesondere Wasserversorgungsleitungen ein Lösen von an der Innenwandung abgelagerten Rückständen während des Schneide- und Aufweitprozesses statt. Diese Ablagerungen sammeln sich vor dem Aufweitkonus und stellen einen von der Schub- oder Zugeinheit zusätzlich zu überwindenden und ständig zunehmenden Widerstand dar.

Der Erfindung liegt somit die Aufgabe zugrunde, eine Aufweitvorrichtung zu schaffen, die ein verbessertes Aufweiten ermöglicht.

Die Lösung der Aufgabe wird durch eine Vorrichtung mäß dem unabhängigen Patentanspruch erreicht. In den Unteransprüchen sind vorteilhafte Ausführungen angegeben.

Der Erfindung liegt unter anderem der Gedanke zugrunde, eine Vorrichtung zum Aufweiten einer unterirdisch verlegten Rohrleitung zu schaffen, die einen Durchtritt von Material erlaubt, welches sich beim Aufweiten vor der Aufweitvorrichtung ansammelt.

Dabei können die Öffnungen die Mantelfläche des Aufweitwerkzeugs quantitativ überwiegen, was insbesondere durch die besonders bevorzugte Ausgestaltung des Aufweitwerkzeuges als Schienenfächer erreicht wird. Hierzu sind eine Mehrzahl von Schienen um eine Achse, vorzugsweise exzentrisch, angeordnet, die mit ihrer Außenfläche Mantellinien eines Kegelstumpfes ausbilden. Die Schienen können Rollen aufweisen, was die Mantelreibung beim Aufweiten zusätzlich verringert. Mit Hilfe einer solchen Anordnung lassen sich die Schub- oder Zugkräfte zum Aufweiten des Rohres optimal ausnutzen, da mögliche Ablagerungen durch das Werkzeug abgeführt und die Mantelreibung entlang des Altrohrs reduziert werden.

Die Schienen können eine unterschiedliche Steigung aufweisen. Hierdurch und/oder durch die exzentrische Anordnung der Schienen läßt sich eine Tendenz der Aufweitvorrichtung, beim Aufweiten in dem Rohr zu verbleiben, erreichen. Die Schienen können Tragelemente aufweisen, die vorzugsweise als Adapter für eine Schub- oder Zugeinrichtung oder zum Verbinden mit einem entsprechenden Neurohr ausgebildet sind.

lm vorderen Bereich kann die Aufweitvorrichtung ein Abstandsstück zur Anbindung an eine Schneidvorrichtung aufweisen. Der hierdurch erreichte Abstand zwischen Schneiden und Aufweiten des Rohres stellt sicher, daß das Rohr auch tatsächlich durch die Schneidvorrichtung geöffnet und nicht durch die Aufweitvorrichtung aufgerissen wird. Der Abstand zwischen Schneidvorrichtung und Aufweitvorrichtung beträgt vorzugsweise ein 1 bis 5-faches des Rohrdurchmessers.

Die Erfindung wird nachfolgend anhand eines in der Zeichnung dargestellten Ausführungsbeispiels des näheren erläutert. ln der Zeichnung zeigen:

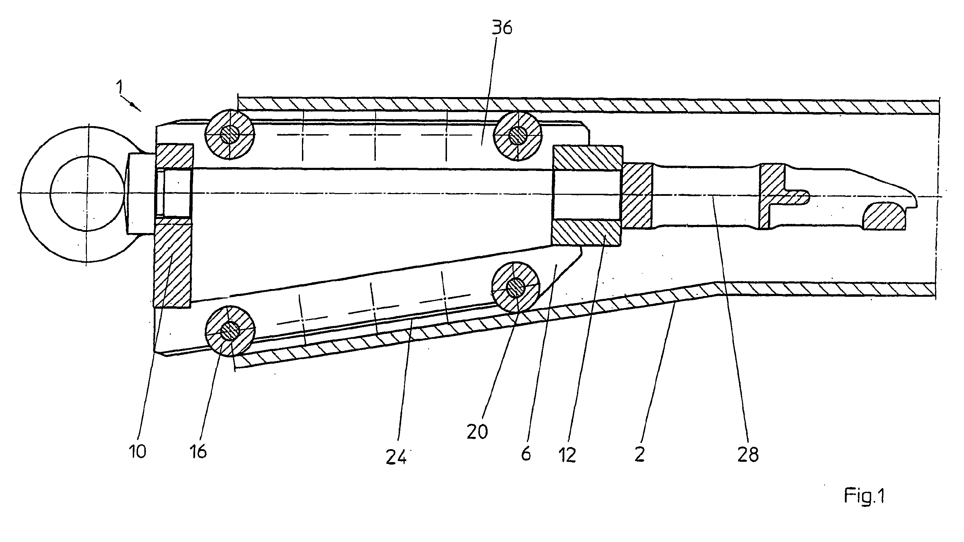

- Fig.1: eine Darstellung der erfindungsgemäßen Aufweitvorrichtung im Rohr;
- Fig. 2: eine Ansicht der Rückseite der erfindungsgemäßen Aufweitvorrichtung der Fig. 1.

Die Vorrichtung zum Aufweiten einer unterirdisch verlegten Rohrleitung besteht aus einem Aufweitwerkzeug 1, welches im teilaufgeweiteten Rohr 2 dargestellt ist. Das Aufweitwerkzeug 1 weist Schienen 4, 6, 8 auf, die an Tragelementen 10, 12 angeordnet sind. Die Schienen weisen Rollen 14, 16, 18 auf, die mit ihrer Lauffläche 20 längs der durch die Schienenfläche 22, 24, 26 aufgespannten Mantelfläche eines Kegelstumpfes aus diesen hervortreten.

Die Schienen 4, 6, 8 sind sternförmig um die Tragelemente 10, 12 so angeordnet, daß der durch die Schienen und die Tragelemente ausgebildete geometrische Körper eine Exzentrizität aufweist. Diese geometrische Form führt dazu, daß das Aufweitwerkzeug die Tendenz hat, beim Aufweiten auf der Achse des Rohres zu verbleiben.

An dem Tragelement 12 ist ein Verbindungsstück 28 zum Verbinden der Aufweitvorrichtung mit einem Schneidwerkzeug angeordnet.

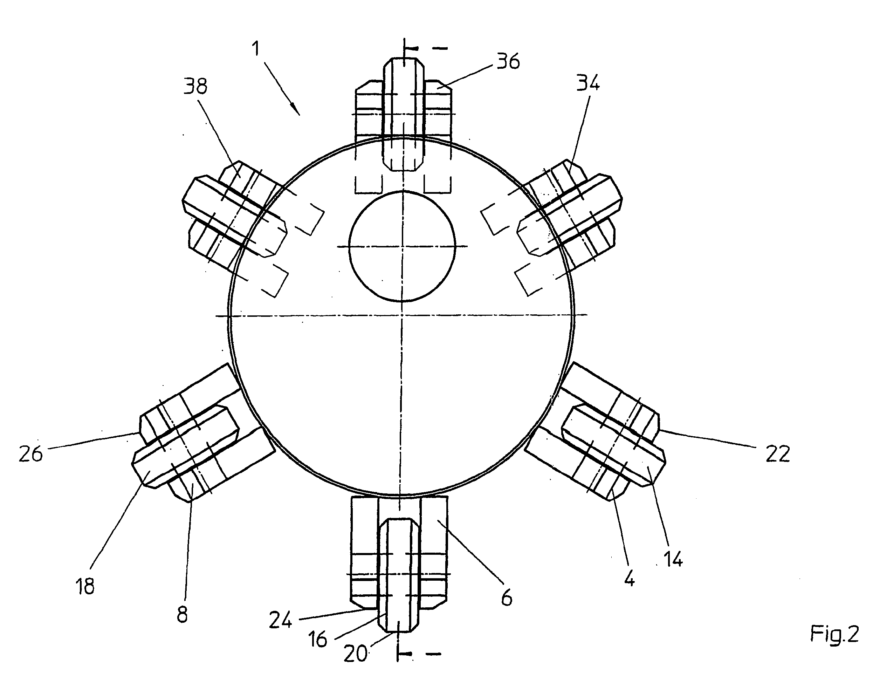

Bei dem in Fig. 2 dargestellten exzentrischen Aufweitkonus weisen die Schienen 4, 6, 8 eine andere Steigung in bezug auf die Tragelemente 10, 12 auf als die Schienen 34, 36, 38. Hierdurch wird eine exzentrische Ausrichtung des Aufweitwerkzeuges im Rohr erreicht.

Beim Einsetzen der Aufweitvorrichtung in das aufzuweitende Rohr wird diese in einem Abstand des 1-bis 5-fachen Rohrdurchmessers mit Hilfe des Verbindungsstücks 28 hinter einem Schneidwerkzeug angeordnet. Hierdurch läßt sich ein ausreichender Abstand zwischen der Wirkebene des Aufweitwerkzeugs im Bereich des maximalen Radius des Aufweitwerkzeugs zu dem fortlaufenden Öffnungspunkt des Schneidwerkzeugs einstellen.

Durch die schienenartige Ausgestaltung steht zwischen den Schienen genügend Raum für den Durchtritt von Ablagerungen und anderen Widerstandskörpern, die sich vor dem Aufweitwerkzeug oder im Bereich des Schneidwerkzeugs ansammeln, zur Verfügung. Je nach Rohr und erwarteter Ablagerungen läßt sich die Zahl der Schienen variieren. Die an den Schienen angeordneten Rollen erlauben ein widerstandsarmes Fortbewegen der Aufweitvorrichtung innerhalb des Rohres.

## Patentansprüche

1. Vorrichtung zum Aufweiten einer unterirdisch verlegter Rohrleitung mit einem Aufweitwerkzeug (1), welches mindestens eine Öffnung für einen Materialdurchtritt aufweist, **dadurch gekennzeichnet, daß** das Aufweitwerkzeug (1) Schienen (4, 6, 8) aufweist, deren Außenflächen Mantellinien eines Kegelstumpfes ausbilden.

2. Vorrichtung nach Anspruch 1, **dadurch gekennzeichnet, daß** die Öffnungen die geschlossenen Bestandteile der Mantelfläche des Aufweitwerkzeugs (1) quantitativ überwiegen.

3. Vorrichtung nach einem der vorhergehenden Ansprüche, **dadurch gekennzeichnet, daß** die Schienen Rollen (14, 16, 18) aufweisen.

4. Vorrichtung nach einem der vorhergehenden Ansprüche, **dadurch gekennzeichnet, daß** die Schienen exzentrisch angeordnet sind.

5. Vorrichtung nach einem der vorhergehenden Ansprüche, **dadurch gekennzeichnet, daß** die Schienen (4, 6, 8; 34, 36, 38) eine unterschiedliche Steigung aufweisen.

6. Vorrichtung nach einem der vorhergehenden Ansprüche, **dadurch gekennzeichnet, daß** die Schienen auf mindestens einem Tragelement (10, 12) angeordnet sind.

7. Vorrichtung nach Anspruch 6, **dadurch gekennzeichnet, daß** das Tragelement (10) als Scheibe ausgebildet ist.

8. Vorrichtung nach einem der vorhergehenden Ansprüche, **gekennzeichnet durch** mindestens eine Kupplung zur Anbindung eines Gestänges oder einer Schneidvorrichtung.

9. Vorrichtung nach einem der vorhergehenden Ansprüche, **gekennzeichnet durch** ein Abstandsstück (28) zur Anbindung an eine Schneidvorrichtung.

10. Vorrichtung nach Anspruch 9, **dadurch gekennzeichnet, daß** die Länge des Abstandsstücks (28) einem Vielfachen des Rohrdurchmessers entspricht.

## Claims

1. Device for expanding an underground pipeline using an expansion tool (1), which comprises at least one opening for the passage of a material, **characterized in that** the expansion tool (1) has rails (4, 6, 8) whose outer faces form surface lines of a truncated cone.

2. Device according to Claim 1, **characterized in that** the openings quantitatively outweigh the closed components of the surface area of the expansion tool (1).

3. Device according to any one of the preceding claims, **characterized in that** the rails comprise rollers (14, 16, 18).

4. Device according to any one of the preceding claims, **characterized in that** the rails are arranged eccentrically.

5. Device according to any one of the preceding claims, **characterized in that** the rails (4, 6, 8; 34, 36, 38) have a differing gradient.

6. Device according to any one of the preceding claims, **characterized in that** the rails are arranged on at least one carrying element (10, 12).

7. Device according to Claim 6, **characterized in that** the carrying element (10) is configured as a disk.

8. Device according to any one of the preceding claims, **characterized by** at least one coupling for connecting a rod or a cutting device.

9. Device according to any one of the preceding claims, **characterized by** a spacer (28) for connecting to a cutting device.

10. Device according to Claim 9, **characterized in that** the length of the spacer (28) corresponds to a multiple of the pipe diameter.

## Revendications

1. Dispositif pour élargir une canalisation ou conduite enterrée avec un outil d'élargissement (1), lequel présente au moins une ouverture pour une pénétration ou un passage de matériau, **caractérisé en ce que** l'outil d'élargissement (1) comporte des rails (4, 6, 8), dont les surfaces extérieures forment les génératrices d'un cône tronqué.

2. Dispositif selon la revendication 1, **caractérisé en ce que** les ouvertures sont quantitativement supérieures aux parties fermées de la surface d'enveloppe de l'outil d'élargissement (1).

3. Dispositif selon l'une des revendications précédentes, **caractérisé en ce que** les rails comportent des rouleaux (14, 16, 18).

4. Dispositif selon l'une des revendications précédentes, **caractérisé en ce que** les rails sont placés de manière excentrée.

5. Dispositif selon l'une des revendications précédentes, **caractérisé en ce que** les rails (4, 6, 8 ; 34, 36, 38) présentent une pente différente.

6. Dispositif selon l'une des revendications précédentes, **caractérisé en ce que** les rails sont placés sur au moins un élément de support (10, 12).

7. Dispositif selon la revendication 6, **caractérisé en ce que** l'élément de support (10) est formé comme un disque.

8. Dispositif selon l'une des revendications précédentes, **caractérisé en ce qu'**il comporte au moins un accouplement pour relier une tringle ou un dispositif de découpe.

9. Dispositif selon l'une des revendications précédentes, **caractérisé en ce qu'**il comporte une pièce d'écartement (28) destinée à être reliée à un dispositif de découpe.

10. Dispositif selon la revendication 9, **caractérisé en ce que** la longueur de la pièce d'écartement (28) correspond à un multiple du diamètre du tuyau ou de la conduite.
